# FASCICULE DE BREVET EUROPEEN

(11) **EP 2 293 521 B1**
(45) Date de publication et mention de la délivrance du brevet: **05.09.2012**
(21) Numéro de dépôt: 10175615.3
(22) Date de dépôt: 07.09.2010
(51) Int. Cl.: H04L 29/08

(54) **Procédé de geolocalisation IP dans un réseau d'entreprise**
Geolokalisierungsverfahren innerhalb eines Unternehmensnetzwerkes
Geolocation method in a factory network

(30) Priorité: 08.09.2009 FR 0904294
(43) Date de publication de la demande: 09.03.2011
(73) Titulaire: Alcatel Lucent, 75007 Paris (FR)
(72) Inventeur: Dantec, Fabrice, 29228 Brest (FR); Souben, Michel, 29228 Brest (FR)
(74) Mandataire: Sciaux, Edmond

(56) Documents cités:
- WO-A2-2006/012219
- US-A1- 2005 021 853
- US-A1- 2006 099 970

## Description

La présente invention se rapporte au domaine technique des télécommunications et plus particulièrement au service de géolocalisation destiné aux utilisateurs des moyens de communications instantanées.

Dans la suite, on désignera par « moyens de communications instantanées » tous moyens de communications temps réel tel que les messageries instantanées, les moyens de communications mobiles et les outils des réseaux sociaux et de microblogage.

Le développement d'Internet a fait émerger avec lui un grand nombre de moyens de communications instantanées qui ne cessent de se développer et de connaitre une popularité fulgurante. Ils se particularisent par le fait que les interactions entre utilisateurs sont en ligne et en temps réel, permettant ainsi des interactions actives, contrairement aux autres moyens de communication dont les interactions se réalisent hors ligne ou en temps différé.

Un moyen de communications instantanées requiert le déploiement d'une plateforme de communications instantanées avec des applications clientes installées sur des terminaux utilisateur (ordinateurs, PDA ou téléphone portable par exemples) qui permettent l'échange instantané de données (textuelles, vocales, visuelles, émoticônes, ou toutes combinaisons de ces formats) entre plusieurs terminaux distants et connectés à au moins un même réseau (le plus communément celui d'Internet).

Les utilisateurs des moyens de communications instantanées (tels que MY Instant Communicator^{™} (édité par Alcatel-Lucent), Microsoft Office Communicator^{™} ou IBM Lotus Sametime) ont ainsi, généralement, un compte associé à un programme ou une interface web, désignés dans la suite par application cliente, à installer et/ou configurer sur leurs terminaux utilisateur.

Certains moyens de communications instantanées offrent un système de notification en temps réel de présence (connecté, déconnecté, ou absent par exemples) et de disponibilité (en communication, occupé ou disponible par exemples), indiquant les membres qui sont en ligne pour interagir ainsi que leurs disponibilités, voire leur état d'âme.

D'autres moyens de communications instantanées offrent un système de géolocalisation IP. Ce système permet d'afficher l'adresse géographique actuelle d'un utilisateur connecté à l'ensemble des utilisateurs connectés de sa liste de contacts.

Un service de géolocalisation destiné aux moyens de communications instantanées s'avère particulièrement utile car il permet à un utilisateur de vérifier la localisation actuelle d'un contact connecté avant toute tentative d'interaction avec lui via ce moyen de communications instantanées. La connaissance de l'endroit actuel d'un contact connecté permet de mieux favoriser l'établissement d'une interaction avec lui. A titre d'exemple illustratif, un utilisateur, ayant dans sa liste de contact un membre de son équipe de travail qui est connecté, préfère connaitre en temps réel sa localisation actuelle afin
- de mieux synchroniser leurs interactions (s'ils sont en ce moment sur le même site de l'entreprise pour entamer un certain travail, si son collègue est sur tel site pour lui solliciter tel service par exemples) ;
- d'éviter d'initialiser des interactions inappropriées (par exemple entre deux personnes se trouvant dans deux fuseaux horaires très éloignés).

La solution IBM Lotus Sametime propose à son utilisateur la géolocalisation de ses contacts. Cette solution permet de localiser un terminal IP à partir duquel un contact est connecté en fonction de l'adresse IP et l'adresse MAC qui lui sont attribuées. Pour cela, chaque utilisateur est invité à fournir sa localisation actuelle qui sera stockée en local sur le terminal IP et couplée aux adresses IP et MAC actuellement attribuées au terminal.

Plusieurs solutions commercialisées par une pluralité d'entreprise (Digital Envoy, MaxMind and Quova) s'appuient sur des bases de données d'adresses IP corrélées à des localisations géographiques. Ces solutions permettent de localiser une adresse IP dans un pays, voir une ville, si les bases de données le permettent.

Le document US 2002/0143991 présente une méthode de géolocalisation d'un terminal IP en utilisant la fonction traceroute. Cette méthode se base sur l'application de la fonction traceroute vers la cible dont on cherche la localisation. La fonction traceroute indique sur quelle voie les paquets ont été acheminés entre deux terminaux IP distants; une source et une destination. Elle donne en résultat une trace du chemin parcouru par des paquets IP, ainsi que les temps de transit pour chaque noeud intermédiaire du parcours.

Le document US 2005/0021853 présente aussi une autre méthode de géolocalisation en utilisant la fonction traceroute.

Les systèmes et procédés connus sont imparfaits, notamment en raison de leur faible fiabilité principalement due
- aux imprécisions retournées par la fonction traceroute exécutée en destination de la cible à localiser. En effet, il arrive fréquemment qu'un noeud intermédiaire et/ou destinataire bloque et/ou ne réponde pas à la fonction traceroute pour des raisons de sécurité (pour ne pas révéler la structure du réseau en utilisant un pare-feu ou des filtres) ou tout simplement à cause d'une implémentation incorrecte (ne respectant pas la RFC 1812 par exemple) ;
- au manque d'adaptabilité automatique au déplacement du terminal. Autrement dit, un même terminal gardant les mêmes identifiants (adresse IP et/ou MAC) aura toujours la même localisation, peu important le réseau à partir duquel est connecté. Par exemple, selon la solution de IBM Lotus Sametime, un terminal connecté au réseau de l'entreprise ou au réseau de la maison avec la même adresse IP/MAC est supposé à la même localisation, tant que l'utilisateur ne l'a pas modifiée manuellement.

Un objet de la présente invention est de remédier aux inconvénients précités.

Un autre objet de la présente invention est de fournir un service de géolocalisation IP destiné aux moyens de communications instantanées.

Un autre objet de la présente invention est d'améliorer les services rendus par les moyens de communications instantanées à ses utilisateurs.

Un autre objet de la présente invention est de localiser au sein d'un réseau d'entreprise un utilisateur connecté à une plateforme de communications instantanées supportée par ce réseau.

Un autre objet de la présente invention est d'informer l'utilisateur d'un moyen de communications instantanées de la géolocalisation de ses contacts connectés à cette plateforme de communications instantanées.

Un autre objet de la présente invention est d'améliorer la commodité d'une interaction et de favoriser son établissement via un moyen de communications instantanées.

Un autre objet de la présente invention est la géolocalisation IP, à un certain niveau de granularité, permettant la localisation physique (géographique) d'un terminal identifiable d'une manière unique à l'aide d'une adresse IP dans un réseau de communication.

Un autre objet de la présente invention est de permettre à un utilisateur de connaitre les fuseaux horaires de ses différents contacts connectés à la même plateforme de communications instantanées afin de mieux synchroniser les moments d'établissement de ses interactions.

Un autre objet de la présente invention est de diffuser la localisation d'un utilisateur connecté à une plateforme de communications instantanées à d'autres plateformes de communications instantanées auxquelles il est inscrit.

À cet effet, l'invention propose, suivant un premier aspect, un procédé de géolocalisation IP au sein d'un réseau d'entreprise d'un terminal utilisateur comprenant une application cliente connecté à une plateforme de communications instantanées supportée par ledit réseau d'entreprise, le serveur de la dite plateforme possédant au moins une adresse privée qui ne peut être résolue que de l'intérieur dudit réseau d'entreprise, ce procédé comprenant les étapes suivantes :
- exécution de la fonction traceroute du terminal utilisateur à localiser vers le serveur de la plateforme de communications instantanées, le serveur étant désigné par son adresse privée ;
- extraction de l'identifiant du premier hôte rencontré dans l'itinéraire retourné par la fonction traceroute ;
- communication de l'identifiant extrait au serveur de la plateforme de communications instantanées ;
- récupération, par le serveur, de la localisation correspondante à l'identifiant communiqué auprès d'une base de données centralisant des identifiants des hôtes dudit réseau d'entreprise et leurs localisations respectives ;
- diffusion, selon les préférences utilisateur de l'utilisateur de l'application cliente, la localisation récupérée aux contacts de l'utilisateur qui sont connectés à ladite plateforme de communications instantanées.

L'invention propose, selon un deuxième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, laquelle est faite en référence aux dessins annexés dans lesquels,
- la figure 1 illustre schématiquement un mode de réalisation de la présente invention ;
- la figure 2 est un graphe affichant les étapes d'un mode de réalisation de la présente invention.

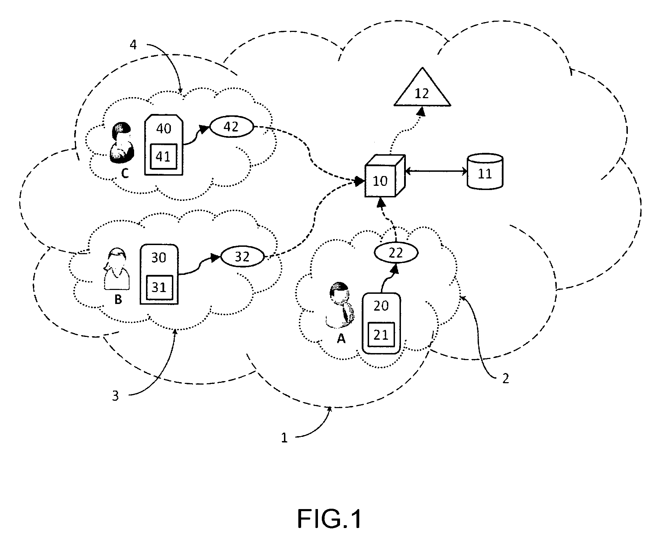

Sur la figure 1 est affiché un réseau 1 de communications comprenant une pluralité de sites 2, 3, 4 spatialement distants. Dans la suite, le réseau 1 de communication est désigné par réseau 1 d'entreprise. On entend ici par « réseau d'entreprise » toute structure informatique administrée par une seule entité qui a ses propres politiques de routage.

A titre d'exemples illustratifs, les sites 2, 3, 4 peuvent représenter
- des différents sous-réseaux distants d'un campus ;
- des différents départements d'un ministère répartis sur un Etat ; ou plus généralement
- des différents sites d'une entreprise.

Les sites 2, 3, 4 peuvent être répartis sur une pluralité d'espaces, d'étages, de bâtiments, de villes, voire d'Etats, tel que par exemple dans le cas d'une entreprise multinationale. A titre d'exemple non-limitatif, le réseau 1 d'entreprise peut être le réseau d'une entreprise dont le siège social (site 2) est basé, par exemple, à Paris, le centre de vente (site 3) est, par exemple, basé à Londres et le site de production (site 4) est basé par exemple, à New York.

Le réseau 1 d'entreprise supporte une plateforme de communications instantanées gérée par un administrateur 12 et comprenant un serveur 10 et une base de données 11. Un utilisateur A, B, C peut se connecter, directement ou via des réseaux d'accès, à cette plateforme de communications instantanées à l'aide des terminaux 20, 30, 40 utilisateur sur lesquels est installée une application cliente 21, 31, 41 compatible avec cette plateforme. Les applications clientes 21, 31, 41 à la plateforme de communications instantanées de serveur 10 sont de type MY Instant Communicator^{™} (édité par Alcatel-Lucent) ou Microsoft Office Communicator^{™}. Comme exemple de réseau d'accès, on note le réseau Internet ou le Réseau Terrestre Mobile Public (PLMN).

A titre d'exemple, l'utilisateur A peut utiliser une application cliente 21 mobile installée sur son PDA (personal digital assistant) pour se connecter à la plateforme de communications instantanées, qui est supportée par le réseau 1 d'entreprise, via un réseau d'accès PLMN.

Dans ce réseau 1 d'entreprise, deux adresses sont attribuées au serveur 10, à savoir,
- une adresse privée (IP/ FQDN (Fully Qualified Domain Name)) qui ne peut être résolue que de l'intérieur du réseau 1 d'entreprise ; et
- une adresse publique qui peut être résolue de l'extérieur du réseau 1 d'entreprise.

Dans la présente description du procédé de géolocalisation IP, on part de l'hypothèse qu'un utilisateur B dispose d'un compte dans le moyen de communications instantanées proposé par le réseau 1 d'entreprise et ayant une liste de contacts non vide.

L'utilisateur B se connecte au moyen de communications instantanées via l'application cliente 31 associée à celui-ci et dont l'interface utilisateur est adaptée au terminal 30 utilisateur (ordinateur, PDA, téléphone portable). Cette connexion est, généralement, précédée d'une étape d'authentification à l'aide d'un nom d'utilisateur et d'un mot de passe ou, plus généralement, d'un identifiant.

Suite à l'étape d'authentification, une fonction traceroute est effectuée en destination du serveur 10 en le désignant par son adresse privée. Traceroute permet de découvrir les sauts à effectuer entre le terminal 30 utilisateur (hôte source) et le serveur 10 (hôte destination). Rappelons que dans ce cas, l'adresse privée peut être résolue car la fonction traceroute est lancée de l'intérieur du réseau 1 d'entreprise.

La fonction traceroute donne en résultat la liste des hôtes successivement révélés sur le chemin liant le terminal 30 utilisateur, à partir duquel est lancé l'application cliente 31, et le serveur 10, ainsi que leurs temps de transit respectifs. Ces hôtes sont désignées par leurs adresses IP.

Dans le cas illustré sur la figure 1, la première adresse IP de la liste retournée par la fonction traceroute correspond à celle du routeur 32.

Il est à noter qu'un hôte, se trouvant sur l'itinéraire liant le terminal 30 utilisateur à localiser au serveur 10, qui ne révèle pas sa présence, apparait systématiquement sous la forme d'une étoile dans le résultat retourné par la fonction traceroute. La présente invention suppose, donc, que le premier saut de la fonction traceroute soit correctement identifié à l'aide de son adresse IP.

La première adresse IP de la liste des adresses IP révélées par la fonction traceroute est transmise au serveur 10. Autrement dit, l'adresse IP du routeur 32 est transmise au serveur 10.

Le serveur 10 requiert la localisation du routeur 32 auprès de la base de données 11.

La base de données 11 est une base extensible qui
- centralise les identifiants des routeurs découverts dans le réseau 1 d'entreprise ; et
- stocke, au moins temporairement, les identifiants des utilisateurs et leurs localisations respectives déjà estimées.

La localisation du terminal 30 utilisateur, et donc de l'utilisateur B, est estimée égale à celle du routeur 32. L'utilisateur B de l'application cliente 31 est supposé co-localisé avec le routeur 32. La localisation du routeur le plus proche d'un utilisateur connecté est supposée la possible localisation de ce dernier. Autrement dit, la localisation du premier hôte rencontré dans l'itinéraire liant la cible à localiser au serveur 10 est estimée la localisation de cette cible.

La localisation du routeur 32 retournée par la base de données 11 au serveur 10 est supposée la même que celle de l'utilisateur B de l'application cliente 31 à la plateforme de communications instantanées de serveur 10.

Selon ses préférences utilisateur, la localisation de l'utilisateur B peut être diffusée à l'ensemble des ces contacts connectés.

Supposons que la liste de contact de l'utilisateur B comprend l'utilisateur A qui est connecté à la plateforme de communications instantanées, supportée par le réseau 1 d'entreprise, via l'application cliente 21 installée sur le terminal 20 utilisateur, alors
- l'utilisateur A est informé de la localisation de l'utilisateur B qui correspond à celle du routeur 32 ; et d'une manière équivalente
- l'utilisateur B est informé de la localisation de l'utilisateur A qui est correspond à celle du routeur 22.

La présente invention permet à un utilisateur de définir
- des règles de diffusion de ses informations de localisation vers un ou plusieurs de ses contacts (ne pas diffuser ma localisation, diffuser ma localisation uniquement pour « contact n», diffuser ma localisation uniquement entre 8h-12h, ne pas diffuser ma localisation si mon statut est « occupé » ou « invisible » par exemples); et
- des règles de réception des notifications de localisation concernant un ou plusieurs de ses contacts (afficher les informations de géolocalisation au début de chaque interaction, toujours afficher les informations de géolocalisation du « contact 1 » par exemples).

En variante ou en combinaison, l'heure locale d'un utilisateur connecté est diffusée à ses contacts connectés.

La gestion de l'affichage d'une notification de géolocalisation est prise en charge par l'interface utilisateur de l'application cliente 31. Elle peut prendre la forme, à titre d'exemples :
- d'un complément du statut d'un contact (« contact 1 » est « connecté » du « site Y » par exemple) ;
- d'un message textuel à afficher dans la fenêtre d'interactions (dans le cas d'une messagerie instantanée par exemple)
- d'un message textuel s'affichant dans une boite de réception (dans le cas d'un terminal mobile par exemple) ;
- d'un message vocal prononçant le contenu textuel d'une notification de géolocalisation ;
- d'un message à afficher lors du passage du curseur de la souris sur un contact connecté.

Dans le cas où aucune information de géolocalisation n'est retournée de la base de données 11 concernant l'identifiant du routeur 32 du réseau 1 d'entreprise, pour la raison, par exemple,
- que la base de données 11 reçoit pour la première fois une requête concernant ce routeur 32 ; ou tout simplement
- aucune information de géolocalisation n'est disponible concernant ce routeur 32
une notification est transmise à l'utilisateur B lui requérant de spécifier sa localisation actuelle. Les données de localisation rentrées par l'utilisateur B vont servir
- d'informations de localisation actuelle de l'utilisateur B ; et
- d'informations de localisation du routeur 32 à enregistrer dans la base de données 11.

Il en résulte un travail collaboratif enrichissant le contenu de la base de données 11.

Il est à noter que l'invitation de l'utilisateur à renter sa localisation actuelle peut prendre différentes formes telles que demander à l'utilisateur:
- de rentrer son adresse actuelle ;
- d'indiquer sur une carte (google maps par exemple) sa localisation actuelle ; ou
- de choisir son endroit actuel parmi une liste d'adresses.

Selon un mode de réalisation, le serveur 10 informe (par courriel par exemple) l'administrateur 12 de l'ajout d'une nouvelle entité réseau à la base de données 11. L'administrateur peut, à son tour, vérifier la validité des localisations nouvellement ajoutées tels que supprimer, ajouter un code postal, modifier la manière de présentation d'une adresse (ville-rue-appartement par exemple) ou ajouter le fuseau horaire.

Lorsqu'un utilisateur se connecte de l'extérieur du réseau 1 d'entreprise, l'adresse privée ne peut être résolue. On en déduit que l'utilisateur se connecte de l'extérieur de l'entreprise. Dans ce cas, l'utilisateur ne peut être localisé avec précision. L'utilisateur est, ainsi, invité à spécifier son adresse actuelle qui sera transmise au serveur 10. Cette localisation sera diffusée à ses contacts connectés selon ses préférences utilisateur.

Il est à noter que le procédé qui vient d'être décrit peut être assuré à l'aide d'une extension ou, plus généralement, d'une application informatique, indépendante ou non aux applications clientes 21, 31, 41 à une plateforme de communications instantanées.

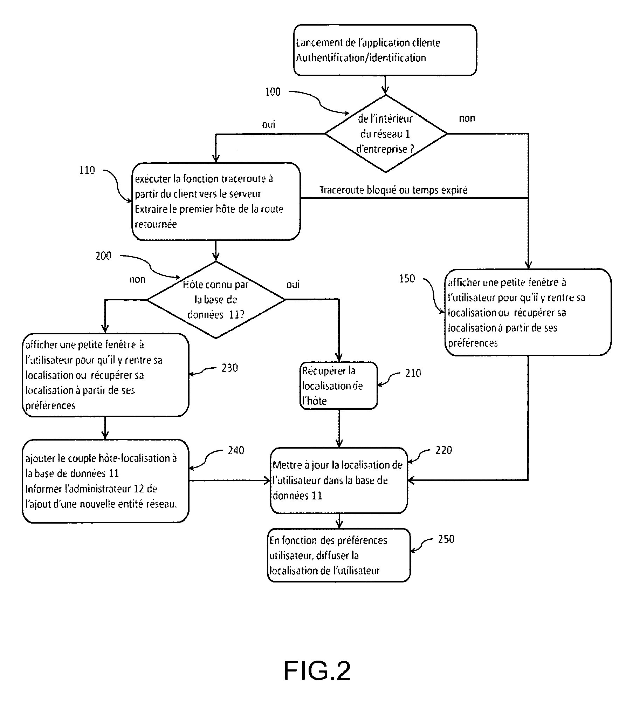

En référant maintenant à la figure 2, au lancement de l'application cliente 21, on commence par vérifier si la connexion a lieu de l'intérieur ou de l'extérieur du réseau 1 d'entreprise (test 100). Ceci est obtenu en fonction du résultat de la résolution de l'adresse privée du serveur 10. En effet, si l'adresse privée est résolue par le réseau à partir duquel l'utilisateur A est connecté, alors cet utilisateur A est connecté de l'intérieur du réseau 1 d'entreprise. Sinon, il est connecté de l'extérieur du réseau 1 d'entreprise.

Lors d'une connexion de l'intérieur du réseau 1 d'entreprise, une fonction de traceroute est effectuée du terminal 20 utilisateur vers le serveur 10. L'identifiant (l'adresse IP) du premier saut (le routeur 22) de l'itinéraire liant le terminal 20 utilisateur au serveur 10 est extrait du résultat retourné par la fonction traceroute. Cet identifiant est transmis au serveur 10. Le serveur 10 demande la localisation correspondante à cet identifiant auprès de la base de données 11.

Suite au test 200 de la figure 2, si l'identifiant du premier routeur 22 sur l'itinéraire liant le terminal 20 utilisateur au serveur 10 est connu par la base de données 11, alors
- communiquer la localisation de ce routeur 22 au serveur 10 (étape 210 de la figure 2);
- mettre à jour la localisation de l'utilisateur A dans la base de données 11 (étape 220 de la figure 2) ;
- diffuser la localisation de l'utilisateur A à ces contacts connectés, selon ses préférences utilisateur.

Il est à noter que les identifiants des utilisateurs ainsi que leurs localisations respectives sont stockés, au moins temporairement, dans la base de données 11.

Suite au test 200 de la figure 2, si l'identifiant du premier hôte sur l'itinéraire liant le terminal utilisateur au serveur 10 n'est pas connu par la base de données 11, alors
- récupérer la localisation de l'utilisateur A à partir de ses préférences utilisateur enregistrés dans un fichier de configuration de l'application cliente 21 (si cette information existe), ou inviter l'utilisateur A à rentrer sa localisation actuelle dans une petite fenêtre qui lui est affichée (étape 230 de la figure 2) ;
- ajouter le couple (identifiant du premier hôte retournée par la fonction traceroute, la localisation spécifié par l'utilisateur) à la base de données 11, et envoyer une notification à l'administrateur 12 concernant cet ajout (étape 240 de la figure 2) ;
- mettre à jour la localisation de l'utilisateur A dans la base de données 11 (étape 220 de la figure 2) ;
- diffuser la localisation de l'utilisateur A à ces contacts connectés, selon ses préférences utilisateur.

Il est à noter que la fonction traceroute peut échouer pour différentes raisons telles que
- le protocole (ICMP, UDP ou TCP) utilisé par la fonction traceroute est désactivé sur un hôte se trouvant sur l'itinéraire liant le terminal 20 utilisateur au serveur 10 ;
- un hôte se trouvant sur l'itinéraire liant le terminal 20 utilisateur au serveur 10 est temporairement surchargé ;
- un routeur se trouvant sur l'itinéraire liant le terminal 20 utilisateur au serveur 10 qui, pour des raisons de sécurité, n'émet tout simplement pas de réponse ou qui n'est pas correctement configuré (ne respectant pas la RFC 1812 par exemple).

Afin d'éviter d'attendre un temps infini la réponse finale de la fonction traceroute, un temporisateur peut être activé au lancement de la fonction traceroute. A l'expiration du temporisateur, si aucune réponse n'est reçue, alors, la fonction traceroute est considérée échouée. Dans ce cas, la localisation de l'utilisateur A peut être récupérée (étape 150 de la figure 2)
- à partir de ses préférences utilisateur enregistrés dans un fichier de configuration de l'application cliente 21 (si cette information existe) ; ou
- en invitant l'utilisateur à rentrer sa localisation actuelle dans une petite fenêtre qui lui est affichée.

Egalement dans le cas où l'utilisateur A est connecté de l'extérieur du réseau 1 d'entreprise, la localisation de l'utilisateur peut être récupérée (étape 150 de la figure 2)
- à partir de ses préférences utilisateur enregistrés dans un fichier de configuration de l'application cliente 21 (si cette information existe) ; ou
- en invitant l'utilisateur A à rentrer sa localisation actuelle dans une petite fenêtre qui lui est affichée.

En variante ou en combinaison, la fonction traceroute est paramétrée de sorte qu'elle peut être utilisée
- dans des réseaux de différents protocoles (iPv4 ou iPv6 par exemples) ;
- avec différents types de sondes (UDP, ICMP, TCP par exemples) ;
- avec différents numéros de port destination.

Il est à noter que les informations de géolocalisation d'un utilisateur A, obtenues selon le procédé qui vient d'être décrit, peuvent être diffusées (information push) vers les outils des réseaux sociaux et de microblogage (tels que Twitter ou Yammer) auxquels il est inscrit, par l'intermédiaire des interfaces de programmation applicative (Application Programming Interface : API) tel que l'API proposée par Twitter. En effet, le serveur 10 fait parvenir automatiquement les informations de géolocalisation aux outils des réseaux sociaux et de microblogage, sans que ceux-ci aient à en faire la recherche, via les interfaces de programmation applicative correspondantes. Cette opération est communément désignée, en anglais, par le vocable information push.

Suivant un autre mode de réalisation, la première adresse IP de la liste des adresses IP révélées par la fonction traceroute et le temps de transit correspondant sont transmis au serveur 10. Dans ce cas, la précision de la méthode de localisation IP décrite ci-dessus peut être améliorée en utilisant
- le temps de transit correspondant au premier hôte rencontré dans l'itinéraire liant le terminal IP à localiser au serveur 10, pour en déduire la distance approximative séparant le terminal IP à localiser et ce premier hôte, et
- la topologie du réseau qui se trouve derrière ce premier hôte.

## Revendications

1. Un procédé de géolocalisation IP au sein d'un réseau (1) d'entreprise d'un terminal (20, 30, 40) utilisateur comprenant une application cliente (21, 31, 41) connecté à une plateforme de communications instantanées supportée par ledit réseau (1) d'entreprise, le serveur (10) de la dite plateforme possédant au moins une adresse privée qui ne peut être résolue que de l'intérieur dudit réseau (1) d'entreprise, ce procédé comprenant étapes suivantes :
- exécution de la fonction traceroute du terminal (20, 30, 40) utilisateur à localiser vers le serveur (10) de la plateforme de communications instantanées, le serveur étant désigné par son adresse privée ;
- extraction de l'identifiant du premier hôte (22, 32, 42) rencontré dans l'itinéraire retourné par la fonction traceroute ;
- communication de l'identifiant extrait au serveur (10) de la plateforme de communications instantanées ;
- récupération, par le serveur (10), de la localisation correspondante à l'identifiant communiqué auprès d'une base de données (11) centralisant des identifiants des hôtes dudit réseau (1) d'entreprise et leurs localisations respective ;
- diffusion, selon les préférences utilisateur de l'utilisateur (A, B, C) de l'application cliente (21, 31, 41), la localisation récupérée aux contacts de l'utilisateur (A, B, C) qui sont connectés à ladite plateforme de communications instantanées.

2. Procédé selon la revendication 1, **caractérisé en ce que** la localisation récupérée est la localisation de l'utilisateur (A, B, C) de l'application cliente (21, 31, 41) connecté à la plateforme de communications instantanées.

3. Procédé selon l'une quelconque des revendications précédentes, **caractérisé en ce que** l'étape d'exécution de la fonction traceroute du terminal (20, 30, 40) utilisateur à localiser vers le serveur (10) de la plateforme de communications instantanées se déroule au lancement de l'application cliente (21, 31, 41).

4. Procédé selon l'une quelconque des revendications précédentes, **caractérisé en ce que** lorsque la base de données (11) ne comprend aucune information de localisation concernant l'identifiant du premier hôte (22, 32, 42) rencontré dans l'itinéraire retourné par la fonction traceroute, l'utilisateur (A, B, C) est invité à spécifier sa localisation actuelle.

5. Procédé selon la revendication 4, **caractérisé en ce que** la localisation spécifiée par l'utilisateur (A, B, C) et l'identifiant du premier hôte (22, 32, 42) correspondant sont ajoutés à la base de données (11).

6. Procédé selon la revendication 5, **caractérisé en ce que** le serveur (10) informe l'administrateur (12) de l'ajout d'une nouvelle entité réseau à la base de données (11).

7. Procédé selon l'une quelconque des revendications précédentes, **caractérisé en ce que** l'identifiant de l'utilisateur et sa localisation sont stockés dans la base de données (11).

8. Procédé selon l'une quelconque des revendications précédentes, **caractérisé en ce que** lorsque la fonction traceroute échoue, la localisation du terminal est récupérée à partir des préférences utilisateur de l'utilisateur (A, B, C).

9. Procédé selon l'une quelconque des revendications précédentes, **caractérisé en ce que** lorsque la fonction traceroute échoue, l'utilisateur (A, B, C) est invité à spécifier sa localisation actuelle.

10. Procédé selon l'une quelconque des revendications précédentes, **caractérisé en ce que** l'utilisateur (A, B, C) définit des règles de diffusion de ses informations de localisation.

11. Procédé selon l'une quelconque des revendications précédentes, **caractérisé en ce que** l'utilisateur (A, B, C) définit des règles de réception des notifications de localisation concernant un ou plusieurs de ses contacts.

12. Procédé selon l'une quelconque des revendications précédentes, **caractérisé en ce que** la localisation d'un utilisateur (A, B, C) d'une application cliente (21, 31, 41) est diffusée vers les outils des réseaux sociaux et de microblogage auxquels il est inscrit, par l'intermédiaire des interfaces de programmation applicative correspondantes.

13. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 12.

## Claims

1. A method for IP geolocation within an enterprise network (1) of a user terminal (20, 30, 40) comprising a client application (21, 31, 41) connected to an instant communications platform supported by said enterprise network (1), the server (10) of said platform possessing at least one private address that can only be resolved within said enterprise network (1), which method comprises the following steps:
- running the traceroute function of the user terminal (20, 30, 40) to be located to the server (10) of the instant communications platform, the server being designated by its private address;
- extracting the identifier of the first host (22, 32, 42) encountered within the itinerary returned by the traceroute function;
- communicating the extracted identifier to the server (10) of the instant communications platform;
- retrieving, by the server (1), the location corresponding to the communicated identifier from a database (11) that centralizes the identifiers of said enterprise network's (1) hosts and their respective locations;
- distributing, based on the user preferences of the user (A, B, C) of the client application (21, 31, 41), the retrieved location to the contacts of the user (A, B, C) which are connected to said instant communications platform.

2. A method according to claim 1, **characterized in that** the retrieved location is the location of the user (A, B, C) of the client application (21, 31, 41) connected to the instant communications platform.

3. A method according to any one of the preceding claims, **characterized in that** the step of running the traceroute function of the user terminal (20, 30, 40) to be located to the server (10) of the instant communications platform proceeds when the client application (21, 31, 41) is launched.

4. A method according to any one of the preceding claims, **characterized in that** whenever the database (11) comprises no location information regarding the identifier of the first host (22, 32, 42) encountered in the itinerary returned by the traceroute function, the user (A, B, C) is prompted to specify his or her current location.

5. A method according to claim 4, **characterized in that** the locations specified by the user (A, B, C) and the identifier of the corresponding first host (22, 32, 42) are added to the database (11).

6. A method according to claim 5, **characterized in that** the server (10) informs the administrator (12) that a new network entity has been added to the database (11).

7. A method according to any one of the preceding claims, **characterized in that** the user's identifier and his or her location are stored in the database (11).

8. A method according to any one of the preceding claims, **characterized in that** whenever the traceroute function fails, the terminal's location is retrieved from the user preferences of the user (A, B, C).

9. A method according to any one of the preceding claims, **characterized in that** whenever the traceroute function fails, the user (A, B, C) is prompted to specify his or her current location.

10. A method according to any one of the preceding claims, **characterized in that** the user (A, B, C) defines the rules for distributing his or her location information.

11. A method according to any one of the preceding claims, **characterized in that** the user (A, B, C) defines the rules for receiving the location notifications concerning one or more of his or her contacts.

12. A method according to any one of the preceding claims, **characterized in that** the location of a user (A, B, C) of a client application (21, 31, 41) is distributed to the social network and microblogging tools to which he or she has registered, by means of corresponding application programming interfaces.

13. A computer program product implemented on a memory medium, which may be implemented within a computer processing unit, and comprises instructions to implement a method according to one of the claims 1 to 12.

## Patentansprüche

1. Verfahren zur IP-Geolokalisierung, innerhalb eines Unternehmensnetzwerks (1), eines Benutzerendgeräts (20, 30, 40), welches eine Client-Anwendung (21, 31, 41) umfasst und an eine von dem besagten Unternehmensnetzwerk (1) unterstütze Instant-Communications-Plattform angeschlossen ist, wobei der Server (10) der besagten Plattform mindestens eine private Adresse besitzt, die nur innerhalb des besagten Unternehmensnetzwerks (1) aufgelöst werden kann, wobei das Verfahren die folgenden Schritte umfasst:
- Ausführen der Traceroute-Funktion des zu lokalisierenden Benutzerendgeräts (20, 30, 40) zum Server (10) der Instant-Communications-Plattform, wobei der Server anhand seiner privaten Adresse bestimmt wird;
- Extrahieren der von der Traceroute-Funktion zurückgesendeten Kennung des ersten auf der Route angetroffenen Hosts (22, 32, 42);
- Übermitteln der extrahierten Kennung an den Server (10) der Instant-Communications-Plattform;
- Zurückgewinnen, durch den Server (10), der der übermittelten Kennung entsprechenden Position bei einer Datenbank (11), welche die Kennungen der Hosts des besagten Unternehmensnetzwerks (1) und deren jeweiligen Positionen zentralisiert;
- Übertragen, gemäß den Benutzerpräferenzen des Benutzers (A, B, C) der Client-Anwendung (21, 31, 41), der zurückgewonnenen Position an die Kontakte des Benutzers (A, B, C), welche an die besagte Instant-Communications-Plattform angeschlossen sind.

2. Verfahren nach Anspruch 1, **dadurch gekennzeichnet, dass** die zurückgewonnene Position die Position des Benutzers (A, B, C) der Client-Anwendung (21, 31, 41), welcher an die Instant-Communications-Plattform angeschlossen ist, ist.

3. Verfahren nach einem beliebigen der vorstehenden Ansprüche, **dadurch gekennzeichnet, dass** der Schritt des Ausführens der Traceroute-Funktion des zu lokalisierenden Benutzerendgeräts zum Server (10) der Instant-Communications-Plattform bei Starten der Client-Anwendung (21, 31, 41) erfolgt.

4. Verfahren nach einem beliebigen der vorstehenden Ansprüche, **dadurch gekennzeichnet, dass**, wenn die Datenbank (11) keine Positionsbestimmungsinformationen in Bezug auf die von der Traceroute-Funktion zurückgesendete Kennung des ersten auf der Route angetroffenen Hosts (22, 32, 42) enthält, der Benutzer (A, B, C) aufgefordert wird, seine momentane Position anzugeben.

5. Verfahren nach Anspruch 4, **dadurch gekennzeichnet, dass** die vom Benutzer (A, B, C) angegebene Position und die entsprechende Kennung des ersten Hosts (22, 32, 42) zur Datenbank (11) hinzugefügt werden.

6. Verfahren nach Anspruch 5, **dadurch gekennzeichnet, dass** der Server (10) den Administrator (12) von dem Hinzufügen einer neuen Netzwerkentität zur Datenbank (11) informiert.

7. Verfahren nach einem beliebigen der vorstehenden Ansprüche, **dadurch gekennzeichnet, dass** die Kennung des Benutzers und dessen Position in der Datenbank (11) gespeichert werden.

8. Verfahren nach einem beliebigen der vorstehenden Ansprüche, **dadurch gekennzeichnet, dass**, wenn die Traceroute-Funktion fehlschlägt, die Position des Endgeräts aus den Benutzerpräferenzen des Benutzers (A, B, C) zurückgewonnen wird.

9. Verfahren nach einem beliebigen der vorstehenden Ansprüche, **dadurch gekennzeichnet, dass**, wenn die Traceroute-Funktion fehlschlägt, der Benutzer (A, B, C) aufgefordert wird, seine momentane Position anzugeben.

10. Verfahren nach einem beliebigen der vorstehenden Ansprüche, **dadurch gekennzeichnet, dass** der Benutzer (A, B, C) Regeln für die Übertragung seiner Positionsbestimmungsinformationen definiert.

11. Verfahren nach einem beliebigen der vorstehenden Ansprüche, **dadurch gekennzeichnet, dass** der Benutzer (A, B, C) Regeln für den Empfang der Positionsbestimmungsmitteilung in Bezug auf einen oder mehrere seiner Kontakte definiert.

12. Verfahren nach einem beliebigen der vorstehenden Ansprüche, **dadurch gekennzeichnet, dass** die Position eines Benutzers (A, B, C) einer Client-Anwendung (21, 31, 41) über entsprechende Anwendungsprogrammierschnittstellen an die Tools der Unternehmens- und Mikroblockiernetzwerke, bei welchen er registriert ist, übertragen wird.

13. Computerprogramm-Produkt, welches auf einem Speichermedium implementiert wird und dazu geeignet ist, innerhalb einer elektronischen Datenverarbeitungseinheit eingesetzt zu werden und Befehle für das Ausführen eines Verfahrens gemäß einem der Ansprüche 1 bis 12 umfasst.
